Europäisches Patentamt
European Patent Office
Office européen des brevets

(11) Publication number: 0 037 185 B1

# EUROPEAN PATENT SPECIFICATION

(45) Date of publication of patent specification: 03.07.85

(51) Int. Cl.[4]: B 01 D 13/04, C 08 L 81/06

(21) Application number: 81300966.9

(22) Date of filing: 09.03.81

(54) **A semipermeable membrane.**

(30) Priority: 10.03.80 JP 30767/80

(43) Date of publication of application: 07.10.81 Bulletin 81/40

(45) Publication of the grant of the patent: 03.07.85 Bulletin 85/27

(84) Designated Contracting States: BE DE FR GB IT NL

(56) References cited:
FR-A-2 005 334
FR-A-2 331 602
FR-A-2 424 750
GB-A-2 000 720
GB-A-2 047 162
US-A-3 691 068
US-A-4 038 351

PATENTS ABSTRACTS OF JAPAN, vol. 4, no. 65, May 16, 1980, page 72C10

PATENTS ABSTRACTS OF JAPAN, vol. 3, no. 37, March 29, 1979, page 17C4

(73) Proprietor: NITTO ELECTRIC INDUSTRIAL CO., LTD.
1-2, Shimohozumi 1-chome Ibaraki-shi
Osaka 567 (JP)

(72) Inventor: Tsukasa, Ochiumi c/o NITTO ELECTRIC
INDUSTRIAL CO., LTD. No. 1-2, Shimohozumi 1-chome
Ibaraki-shi Osaka (JP)
Inventor: Toshikazu, Kuroda c/o NITTO ELECTRIC
INDUSTRIAL CO., LTD. No. 1-2, Shimohozumi 1-chome
Ibaraki-shi Osaka (JP)

(74) Representative: Pearce, Anthony Richmond et al
Marks & Clerk Alpha Tower Suffolk Street
Queensway Birmingham B1 1TT (GB)

(56) References cited:
JOURNAL OF APPLIED POLYMER SCIENCE, vol. 21, 1977, NEW YORK (US) I. CABASSO et al.: "Porosity and pore Size Determination in Polysulfone Hollow Fibers", pages 1883-1900

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 037 185 B1

## Description

The present invention relates to an aromatic polysulfone semipermeable membrane suitable for ultrafiltration.

Hitherto, various polymers have been examined as materials for semipermeable membranes suitable for ultrafiltration and it is known that an aromatic polysulfone is suitable as a material for membranes, because it has excellent heat resistance and excellent chemical resistance and it can be used to produce semipermeable membranes having a uniform pore size and a sharp molecular weight separation ability when membrane formation is carried out in water using a wet process because it has a low affinity to water. To date, however, aromatic polysulfones have generally proved to be impractical for use in semipermeable membranes since, because of their poor hydrophilic properties, they provide a low water flux when a semipermeable membrane capable of separating low molecular weight materials, namely, a semipermeable membrane having small pore size, is produced. Accordingly, the molecular weight effectively separated by an aromatic polysulfone semipermeable membrane known hitherto for practical use is at the most about 6,000 or so, and the rejection of materials having a molecular weight of 2,000 or so is generally about 20% or less.

In connection with the above, it is already known that the hydrophilic property of an aromatic polysulfone can be improved by introducing groups such as sulfonic acid groups which dissociate into side chains of the aromatic polysulfone. However, semipermeable membranes composed of such a polymer have the disadvantages that the inherent heat resistance or chemical resistance of the polymer is lost by the groups introduced into the polymer and performance of the membrane changes depending on the ion environment of the liquid to be treated.

As a result of research into eliminating the above-described problems in aromatic polysulfone semipermeable membranes, the present inventors have found that semi-permeable membranes suitable for ultrafiltration having a special membrane structure, a rejection of about 25% or more and preferably 30% or more evaluated with polyethylene glycol having an average molecular weight of 2,000 and a pure water flux of about 0.05 $m^3/m^2$ day $kg/cm^2$ or more and preferably 0.2 $m^3/m^2$ day $kg/cm^2$ or more can be unexpectedly obtained when a salt of an inorganic acid or an organic acid is present during preparation of the membrane forming solution (dope or casting dope) by dissolving the aromatic polysulfone in an aprotic polar organic solvent. As a result, the viscosity of the membrane forming solution becomes as high as 200 to 10,000 poises which is markedly higher than ten-odd poises or at the most several tens of poises in the prior suitable cases (1 poise = 0.1 Pa.s).

In producing an aromatic polysulfone semipermeable membrane, hitherto, use of a membrane forming solution having a high viscosity has been generally avoided, because the water flux of the resulting semi-permeable membranes becomes very low. But, in case of producing hollow fibre semipermeable membranes, it is believed necessary to use a membrane forming solution having a relatively high viscosity. For this purpose, an aqueous solution of an electrolyte is added to the membrane forming solution to increase the viscosity to a relatively high value by which the resulting semipermeable membranes have a high water flux, as described, e.g., in Japanese Patent Application (OPI) No. 143777/79 (the term "OPI" as used herein refers to a "published unexamined Japanese patent application"). However, in such a case, the viscosity is only at the most several tens of poises.

Further, in producing hollow fiber aromatic polysulfone membranes for a substrate of composite semipermeable membranes, use of a membrane forming solution having a viscosity as high as several thousands of poises which is obtained by incorporating a large amount of a water-soluble polymer such as polyvinylpyrrolidone in the membrane forming solution has been proposed (*J. Applied Polymer Sci.,* 21, 1883 (1977)). For example, in this process, 60 parts by weight of polyvinylpyrrolidone are incorporated into 100 parts by weight of aromatic polysulfone to prepare a membrane forming solution having a viscosity as high as 250 poises at 50°C. However, since the molecular size of polyvinylpyrrolidone is large in addition to the fact that the amount of the polymer to polysulfone is large, the surface layer of the resulting semipermeable membrane has large pores with a pore size of several tens nm to several hundred nm. Consequently, the resulting semipermeable membrane is suitable as a substrate of a composite semipermeable membrane, but is unable to remove solutes having an average molecular weight of 2,000 or so.

JPA—A—5531474 discloses the production of a selective permeable membrane based on an aromatic polysulfone. However, there is no disclosure of the production of a three-layer type membrane having the pore sizes and layer thicknesses required for a membrane according to the present invention, as will be apparent hereinafter.

GB—A—2000720 and GB—A—2025312 disclose the production of two-layer structure membranes based on aromatic polysulfphones, the layer structure comprising a relatively dense surface layer obtained upon contact with a coagulant and a porous substrate layer corresponding to the part not contacted by the coagulant.

According to one aspect of the present invention, there is provided a semipermeable membrane suitable for ultrafiltration which comprises:

(a) a dense surface layer of a thickness of about 0.01 to about 1 micrometre having fine pores of an average pore size of about 0.5 to 10 nm,
(b) a comparatively dense porous intermediate layer of a thickness of about 2 to about 30 micrometres having fine pores of an average pore size of about 10 nm to about 200 nm, and
(c) a porous substrate layer of a thickness of about 20 to about 500 micrometres having fine pores of an average pore size of about 0.1 to about 5 micrometres, wherein each of said layers is composed of an aromatic polysulfone free of a group which dissociates and the layers are formed continuously in the membrane in the order (a), (b) and then (c), said membrane having a rejection (determined using polyethylene glycol of an average molecular weight of 2,000) of at least about 25% and a water flux of pure water of at least about 0.05 $m^3/cm^2$ day $kg/cm^2$.

The aromatic polysulfone which can be used in the present invention is a polymer containing a repeating unit represented by the following formula (I) or (II).

$$—A—SO_2—A—O(A—R_m—A—X)_n— \qquad (I)$$

$$—A—SO_2—A—SO_2—A—O— \qquad (II)$$

where A represents the same or a different aromatic group, R represents a divalent group, X represents O or $SO_2$, and m and n each represents 0 or 1.

Specific examples of the aromatic group A include

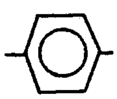 , 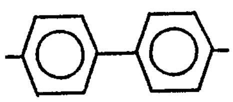 , 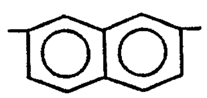 , and 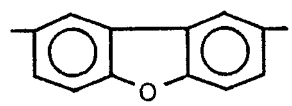 .

specific examples of the divalent group R include

$-C(CH_3)_2-$, $-CH_2-$,

$-C(C_6H_5)_2-$, $-C(CF_3)_2-$, $-C(CH_3)(C_6H_5)-$, 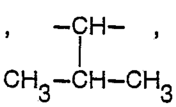 , 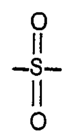

$-S-$, $-O-$, 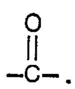 .

Aromatic polysulfones containing the following repeating units are readily available and can be suitably used in the present invention.

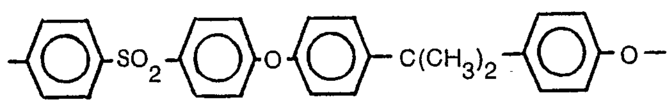 (III)

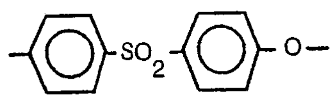 (IV)

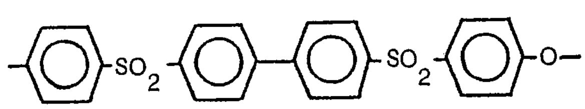 (V)

The production of the aromatic polysulfones containing the repeating unit of the formula (III) is disclosed in, for example, R. N. Johnson, A. G. Farnham, R. A. Clendinning, W. F. Hale and C. N. Merrian, *Journal of Polymer Science,* Part A—1, Vol. 5, pp. 2375—2398 (1967), and the production of the aromatic polysulfones containing the repeating unit of the formula (IV) or (V) is disclosed in, for example, H. A. Vogel, *Journal of Polymer Science,* Part A—1, vol. 8, pp. 2035—2047 (1970).

Particularly, an aromatic polysulfone having the repeating unit represented by the formula (IV) is preferred. Further, in order to obtain semi-permeable membranes with strength and properties for practical use, aromatic polysulfones having a reduced viscosity $\eta_{sp}/C$ at 25°C as a 1.0 g/100 ml dimethylformamide solution of about 0.2 to about 1.0 and preferably 0.25 to 0.80 (reduced viscosity is measured under the same conditions, hereinafter) are preferably used.

Suitable aprotic polar solvents which can be used for forming the membrane forming solutions include dimethylformamide, dimethylacetamide, dimethyl sulfoxide, N-methylpyrrolidone, tetramethyl urea, hexamethyl phosphotriamide and the like. Dimethyl sulfoxide and N-methylpyrrolidone are preferred because of the large solubility of aromatic polysulfone and salts described hereinafter therein.

In the present invention, salts of an organic acid and/or organic acid are used for the purpose of increasing the viscosity of the membrane forming solution. Suitable salts of inorganic acids include one or more alkali metal salts, alkaline earth metal salts and ammonium salts of hydrohalic acids such as hydrochloric acid, hydrobromic acid or hydroiodic acid, nitric acid, sulfuric acid and thiocyanic acid, etc. Specific examples of these salts include lithium chloride, lithium bromide, sodium iodide, calcium chloride, lithium nitrate, potassium nitrate, sodium nitrate, calcium nitrate, magnesium nitrate, potassium thiocyanate, sodium thiocyanate, ammonium bromide, ammonium nitrate and ammonium thiocyanate. In addition, zinc chloride, manganese chloride, tin chloride, iron chloride, aluminium nitrate, copper nitrate and iron nitrate, may be used as other metal salts. Further, if desired, metal salts or ammonium salts of organic acids may be used. Suitable examples of metal salts or ammonium salts of organic acids include alkali metal salts or ammonium salts of monocarboxylic acids having up to 2 carbon atoms which are soluble in water or an aprotic polar organic solvent, or alkali metal salts or ammonium salts of di- or tricarboxylic acids having up to 6 carbon atoms which are soluble in water or an aprotic polar organic solvent. Specific examples thereof include sodium acetate, potassium formate, sodium citrate, etc. These salts must be soluble in both the aprotic polar organic solvent and the coagulating solution described hereinafter.

These salts are present in the membrane forming solution in an amount, generally, of about 0.5 to about 15% by weight and preferably 1 to 10% by weight based on the weight of the solution and they are dissolved in the membrane forming solution in an amount of less than about 45 parts (parts are all by weight, herein) and preferably 3 to 30 parts, based on 100 parts of aromatic polysulfone, although this will vary depending on the kind and the amount of aprotic solvent or aromatic polysulfone, such that the viscosity of the solution is within a prescribed range described hereinafter.

In the present invention, the membrane forming solution is prepared to have a viscosity of about 200 to about 10,000 poises and preferably 300 to 5,000 poises at 30°C by dissolving a desired amount of the salt(s) therein. Such a viscosity is markedly higher than the viscosity of prior solutions of only several tens poises which is believed to be suitable for producing hollow fiber semipermeable membranes. The resulting semipermeable membranes having a practical pure water flux of at least about 0.05 $m^3/m^2$ day $kg/cm^2$ and they have a practical rejection of at least about 25%, preferably at least 30%, for solutes having an average molecular weight of 2,000, which is in contrast to the case on increasing the viscosity of the membrane forming solution using a water-soluble polymer as described above.

The rejection used throughout the specification is defined as follows:

$$\left(1 - \frac{\text{Concentration of Solute in Solution passed through Membrane}}{\text{Concentration of Solute in Feed Solution}}\right) \times 100\ (\%)$$

which is obtained by measuring under conditions of a temperature of 25°C, a pressure of 2 $kg/cm^2$ and an average linear velocity of 3.0 m/sec or more using as a feed solution an aqueous solution containing 5,000 ppm of solute: polyethylene glycol. Further, the water flux of pure water used throughout the specification is measured at a temperature of 25°C and a pressure of 2 $kg/cm^2$ using distilled water. The polyethylene glycol used was special grade chemical produced by Wako Pure Chemical Industries Ltd.

If the viscosity of the membrane forming solution is less than 200 poises, the resulting semi-permeable membranes have a low rejection for solutes having an average molecular weight of 2,000 or so. On the other hand, a viscosity of more than 10,000 poises is not preferred from the standpoint of membrane production, for example, casting the solution on a base becomes difficult because the viscosity is too high, and the resulting semipermeable membranes have a low water flux, too.

When the amount of salts in the membrane forming solution is lower than the above-described range, only semipermeable membranes having a low water flux are obtained where the viscosity is in the range of the present invention. Further, if the amount of salts is more than the above-described range, the solubility of aromatic polysulfone in the membrane forming solution is reduced and the membrane forming solution becomes heterogeneous.

The amount of the aromatic polysulfone in the membrane forming solution depends naturally on the amount of salts, etc., but the amount is generally about 20 to about 60% by weight based on the weight of the membrane forming solution.

The process for preparing the membrane forming solution is not especially limited. The aromatic

polysulfone and the salt(s) may be added to the aprotic polar organic solvent and dissolved therein, or one of the components may be added to a solution of the other and dissolved therein. Further, after preparation of a solution of aromatic polysulfone and a solution of salt(s) respectively, the solutions may be mixed. In dissolving the aromatic polysulfone and/or salt(s) in the solvent, the solvent is preferably heated in order to accelerate dissolution.

The membrane forming solution may additionally contain a solvent which is mixed with the aprotic polar organic solvent and does not dissolve the aromatic polysulfone such as methanol, ethanol, acetone, ethylene glycol or water, in an amount which does not damage the solution uniformity, if desired. The amount of the solvent is about 0.1 to about 30% by weight, though varying depending upon the kind of solvent.

Production of semipermeable membranes having a suitable shape from thus resulting membrane forming solution is not restricted to a specific process, and processes known hitherto for producing semipermeable membrane as disclosed in, for example, US—A—3,615,024 an GB—A—1,325,672 can be utilized. For example, the membrane forming solution can be coated on a base or molded directly to make a film, tube or hollow fibre product without coating on the base and the resulting product then immersed in a coagulating solution. If a glass plate or a glass pipe is used as the base, a filmy or tubular semipermeable membrane is obtained on separating from the base after formation of the membrane. If a woven fabric or a non-woven fabric composed of organic or inorganic fibers such as polyolefin fibers, polyester fibers, acrylic fibers or glass fibers, is used as the base, a flat or tubular semipermeable membrane supported by the fibrous base can be obtained. Further, a hollow fiber semipermeable membrane can be obtained by extruding the membrane forming solution from an annular nozzle and contacting the extrudate with a coagulating solution

The coagulating solution is compatible with the aprotic polar organic solvent and dissolves the salts in the membrane forming solution, but the aromatic polysulfone must not be soluble in the coagulating solution. In general, water is used, but methanol, ethanol, acetone and ethylene glycol, etc., may be used alone or together with water, as coagulating solution. The coagulating solution may contain a solvent which dissolves the aromatic polysulfone in an amount such that the coagulating solution-containing solvent can coagulate the aromatic polysulfone in the membrane forming solution cast on the base.

The membrane forming solution cast is sometimes heated or allowed to stand in air to evaporate a portion of the solvent therein. However, the membrane forming solution cast is generally contacted with a coagulating solution as fast as possible to coagulate the aromatic polysulfone.

The temperature of the coagulating solution is from −5 to 80°C, and lower temperature can provide denser membrane. The immersion time in the coagulating bath is such that at least 80% of the solvent can exchange with the coagulating solution (agent), and in the case of a membrane forming solution having a high viscosity as in the present invention, the immersion time is at least about 10 minutes.

The invention will now be more particularly described with reference to the accompanying drawings, in which:

Figure 1 is a schematic sectional view of an aromatic polysulfone semipermeable membrane according to the invention, and

Figures 2 to 5 are photographs of a section of the aromatic polysulfone semipermeable membrane shown in Figure 1 observed with a scanning electron microscope.

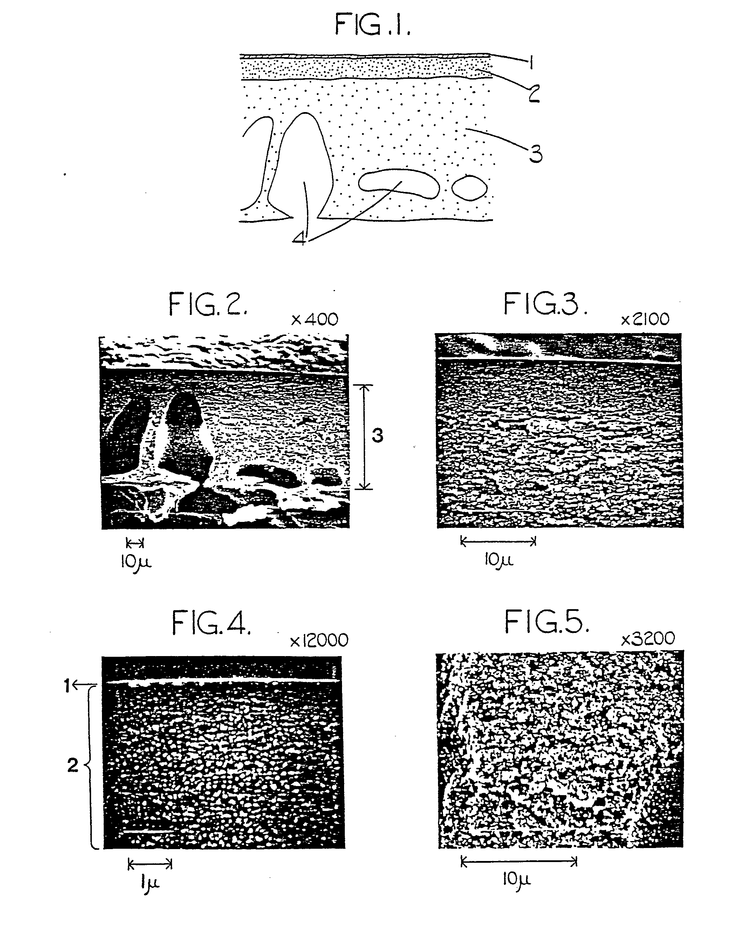

Referring to Figure 1, the membrane shown therein includes a dense surface layer 1 of a thickness of about 0.01 to about 1 micrometre with fine pores of an average pore size of about 0.5 to about 10 nm, a comparatively dense porous intermediate layer 2 of a thickness of about 2 to about 30 μm, preferably 5 to 25 μm, having fine pores of an average pore size of about 10 to about 200 nm and a porous substrate layer 3 of the thickness of about 20 to about 500 μm having fine pores of an average size of about 0.1 to about 5 μm, wherein these layers are formed continuously in the membrane body in the order stated. The substrate layer may sometimes contain cavities 4 having a large pore size. The average size of the fine pores in the intermediate layer is about 10 to about 100 times larger than the average size of the fine pores in the dense layer, and the average size of the fine pores in the porous substrate layer is about 3 to about 50 times larger than the average size of the fine pores in the intermediate layer. A cavity 4 is formed where aromatic polysulfone forming the membrane matrix is not present. The pore size of the fine pores is presumed from the rejection of the semipermeable membrane for an aqueous solution of polyethylene glycol, dextran, water-soluble protein, etc., having various average molecular weights and by observation of the membrane structure using a scanning electron microscope. Further, the thickness of each layer is measured by observation of the membrane structure using a scanning electron microscope.

Figure 2 is a photograph of the entire section of the semipermeable membrane according to the present invention and and Figure 3 is a photograph of the intermediate layer, both obtained using a scanning electron microscope, by which the view of Figure 1 is easily understood.

Figure 4 is a further, enlarged photograph of the surface layer and the intermediate layer shown in Figure 2, and Figure 5 is a further, enlarged photograph of the substrate layer shown in Figure 2.

In Figure 2, 3 is the substrate layer, and in Figure 4, 1 is the surface layer and 2 is the intermediate layer.

The aromatic polysulfone semipermeable membranes of the present invention are structurally different from prior known aromatic polysulfone semipermeable membranes from the standpoint of having a comparatively dense intermediate layer of a substantial thickness between a dense surface layer

and a substrate layer having a coarse porous structure. More specifically, prior known aromatic polysulfone semipermeable membranes having a dense surface layer which connects with a substrate layer having a coarse porous structure and they possess no clear intermediate layer as in the semipermeable membrane of the present invention shown in Figure 3.

As described above, the semipermeable membranes according to the present invention can effectively reject small molecular weight solutes in spite of having a high water flux as compared with that in the prior known membranes. This peculiar property is believed to be related to the presence of the above-described intermediate layer.

As described above, according to the present invention, since the aromatic polysulfone used as a starting material does not have any groups which dissociate, the resulting semipermeable membranes retain their own excellent heat resistance and chemical resistance. Further, it is possible to obtain semipermeable membranes having a practical rejection for solutes having a molecular weight of 2,000 or so which have been believed hitherto to be difficult to reject when aromatic polysulfones are used as a starting material, and a practically large water flux by the use of a membrane forming solution having a high viscosity prepared by addition of salts of an inorganic acid or an organic acid. Moreover, in the semipermeable membrane of the present invention, since the intermediate layer is present, the resistance of the surface layer to high pressure is improved and compacting is avoidable while durability is improved.

Examples of the present invention are described below.

## Example 1

32 parts of an aromatic polysulfone (VICTREX 300P, trade name, manufactured by Imperial Chemical Industries) containing repeating units represented by the above-described formula (IV) and a reduced viscosity of 0.49 were added to 48 parts of N-methylpyrrolidone and stirred at 70°C for 5 hours to obtain a homogeneous solution. Separately, 5.8 parts of lithium nitrate were added to 14.2 parts of N-methylpyrrolidone and stirred at 60°C for 2 hours to obtain a homogeneous solution. These solution were mixed at 60°C to prepare a homogeneous solution as a membrane forming solution. The viscosity of this membrane forming solution was 1,500 poises at 30°C. Measurement of the viscosity was carried out using a BH type viscometer produced by Tokyo Keiki Co.

This membrane forming solution was flow-cast onto a clean glass plate to a thickness of 200 μm. After the lapse of 3 seconds, it was immersed in water containing 10% by weight of N-methylpyrrolidone at 5°C for 24 hours to obtain a semipermeable membrane having a thickness of 120 μm. The membrane was washed with water, dried at 23°C for 96 hours and frozen in liquid nitrogen. The membrane was broken and the cross-section thus broken was deposited with gold to observe the cross-section with a scanning electron microscope. As a result, the thickness of the surface layer of the membrane was 0.1 μm and the thickness of the intermediate layer was 8 μm.

This membrane was put on a flat membrane tester equipped with stirrer. When the rejection was measured under conditions of a temperature of 25°C and a pressure 2 $kg/cm^2$ using aqueous solutions containing 5,000 ppm of polyethylene glycol of an average molecular weight of 2,000 and 6,000, respectively, the rejection was 45% and 98%, respectively. The pure water flux measured was 0.35 $m^3/m^2$ day $kg/cm^2$.

## Comparative Example 1

32 parts of the same aromatic polysulfone as described in Example 1 were added to 68 parts of N-methylpyrrolidone, and a homogeneous membrane forming solution having a viscosity of 190 poises at 30°C was prepared in the same manner as in Example 1. From this solution, a semipermeable membrane having a thickness of 105 μm was obtained. When the properties of the membrane were measured in the same manner as described above, the rejection for polyethylene glycol having an average molecular weight of 2,000 was 45% and the rejection for polyethylene glycol having an average molecular weight of 6,000 was 90%. However, the water flux of pure water was only of 0.015 $m^3/m^2$ day $kg/cm^2$.

## Example 2

32 parts of an aromatic polysulfone containing repeating units represented by the above-described formula (V) and having a reduced viscosity of 0.51 andd 3 parts of calcium chloride dihydrate were added to 65 parts of dimethyl sulfoxide to prepare a membrane forming solution having a viscosity of 350 poises at 30°C. This membrane forming solution was expelled from an annular slit (inner diameter 0.8 mm; outer diameter 1.5 mm) simultaneously with expelling a 2.5 wt% aqueous solution of sodium chloride from a core liquid outlet placed at the center of the annular slit. After the filament produced was allowed to run into space for 100 cm, the filament was coagulated by introduction into a water bath. The filament was then washed for 1 minute in a water bath, and the hollow fiber semipermeable membrane continuously formed was wound on a roll in water at 12 m/minute. This semipermeable membrane had a circular cross-section, which had a dense layer on the inside surface of the hollow fiber. Further, the intermediate layer under the dense layer had a thickness of 5 μm.

1,200 hollow fiber semipermeable membranes produced as described above were put in a transparent acrylic resin pipe having an inside diameter of 52 mm. Both ends of the pipe were potted with an epoxy resin which was then hardened to produce a hollow fiber semipermeable membrane cartridge. When the

rejection was measured by feeding an aqueous solution containing 5,000 ppm of polyethylene glycol to the cartridge under conditions of a temperature of 25°C, a pressure of 2 $kg/cm^2$ and an average linear velocity of 3 m/second, the rejection was 30% in case of polyethylene glycol having an average molecular weight of 2,000 and 95% in case of polyethylene glycol having an average molecular weight of 6,000. Further, the pure water flux was 0.25 $m^3/m^2$ day $kg/cm^2$.

Examples 3—15

Membrane forming solutions containing the components and compositions shown in the following table were prepared. The membrane forming solution was put inside a tubular base composed of two polyester nonwoven layers having an inside diameter of 12.0 mm, a thickness of 0.32 mm and a weight per meter of 9.5 g. After the membrane forming solution was cast in a desired thickness by passing a casting bob through the tube, it was immersed at once in water to coagulate the membrane. Then, the resulting tubular composite membrane was inserted into a stainless steel tube of an inside diameter of 13 mm having per meter about 100 pores of a diameter of 1.0 mm to produce a test tube for measuring the performances of the membranes. The rejection was measured by feeding an aqueous solution of polyethylene glycol having a concentration of 5,000 ppm to the above tube under conditions of a temperature of 25°C, a pressure of 2 $kg/cm^2$ and a feed of amount of 20 l/minute. The results are shown in the following table. The results obtained using a membrane forming solution not containing a salt are shown as Comparative Example 3.

Membrane Forming Solution

| | Component | | | Composition (parts by weight) | | | Viscosity at 30°C |
|---|---|---|---|---|---|---|---|
| | Aromatic Polysulfone[1)] | Salt | Solvent[2)] | Polysulfone | Salt | Solvent | (poise) |
| Example 3 | IV | LiCl | NMP | 40 | 3 | 76 | 580 |
| ,, 4 | ,, | ,, | ,, | 40 | 5 | 76 | 800 |
| ,, 5 | ,, | $LiNO_3$ | ,, | 37 | 3 | 76 | 560 |
| ,, 6 | ,, | ,, | ,, | 37 | 7 | 76 | 700 |
| ,, 7 | ,, | ,, | ,, | 37 | 10 | 76 | 1,400 |
| ,, 8 | ,, | ,, | ,, | 34 | 10 | 76 | 780 |
| ,, 9 | ,, | ,, | DMA | 37 | 7 | 76 | 1,000 |
| ,, 10 | ,, | $ZnCl_2$ | NMP | 41 | 7 | 76 | 1,800 |
| ,, 11 | ,, | $NH_4SCN$ | ,, | 41 | 7 | 76 | 1,200 |
| ,, 12 | ,, | $MgCl_2$ | ,, | 41 | 3 | 76 | 830 |
| ,, 13 | ,, | $CaCl_2$ | DMF | 41 | 3 | 76 | 500 |
| ,, 14 | III | LiCl | ,, | 37 | 3 | 76 | 450 |
| ,, 15 | V | ,, | NMP | 37 | 3 | 76 | 600 |
| Comparative Example 3 | IV | — | ,, | 37 | 0 | 76 | 160 |

Note 1): Roman numbers designate that the aromatic polysulfone contained repeating units of the above-described formulae.

2): NMP = N-methylpyrrolidone,
DMA = dimethylacetamide,
DMF = dimethylformamide.

TABLE (Continued)

| | Membrane Forming Condition | | Performances of Membrane | | | |
|---|---|---|---|---|---|---|
| | | | | Rejection of Polyethylene Glycol (%) | | |
| | Thickness of Coating | Coagulation Temperature | Water Flux of Pure Water | Molecular Weight: 2,000 | Molecular Weight: 6,000 | Thickness of Intermediate Layer |
| | (μm) | (°C) | ($m^3/m^2.day.kg/cm^2$) | | | (μm) |
| Example 3 | 300 | 5.0 | 0.15 | 50 | 97 | 5 |
| ,, 4 | ,, | ,, | 0.25 | 45 | 98 | 10 |
| ,, 5 | 200 | 1.5 | 0.20 | 80 | 98 | 6 |
| ,, 6 | ,, | ,, | 0.28 | 41 | 97 | 8 |
| ,, 7 | ,, | ,, | 0.22 | 38 | 96 | 16 |
| ,, 8 | ,, | ,, | 0.49 | 41 | 98 | 6 |
| ,, 9 | ,, | 5.0 | 0.15 | 85 | 97 | 7 |
| ,, 10 | ,, | ,, | 0.10 | 85 | 99 | 13 |
| ,, 11 | ,, | ,, | 0.14 | 78 | 98 | 15 |
| ,, 12 | ,, | ,, | 0.30 | 42 | 94 | 13 |
| ,, 13 | ,, | ,, | 0.25 | 50 | 95 | 13 |
| ,, 14 | ,, | 10 | 0.20 | 50 | 95 | 6 |
| ,, 15 | ,, | ,, | 0.15 | 40 | 98 | 5 |
| Comparative Example 3 | ,, | 1.5 | 0.003 | 15 | 67 | 1.8 |

Concerning the semipermeable membrane obtained in Example 8, a photograph obtained by a scanning electron microscope of a section of the membrane is shown in Figure 2. Figure 3 is an enlarged photograph of a surface part containing the intermediate layer. The length indications represent 10 μm, respectively. The dense layer of the surface is shown as a white part in the photograph.

**Claims**

1. A semipermeable membrane suitable for ultrafiltration which comprises:
(a) a dense layer of a thickness of about 0.01 to about 1 micrometre having fine pores of an average pore size of 0.5 to 10 nm,
(b) a comparatively dense porous intermediate layer of a thickness of about 2 to about 30 micrometres having fine pores of an average pore size of about 10 nm to about 200 nm, and
(c) a porous substrate layer of a thickness of about 20 to about 500 micrometres having fine pores of an average pore size of about 0.1 to about 5 micrometres, wherein each of said layers is composed of an aromatic polysulfone free of a group which dissociates and the layers are formd continuously in the membrane in the order (a), (b) and then (c), said membrane having a rejection (determined using polyethylene glycol of an average molecular weight of 2,000) of at least about 25% and a water flux of pure water of at least about 0.05 $m^3/m^2$ day $kg/cm^2$.

2. A membrane as claimed in claim 1, wherein the thickness of said comparatively dense porous intermediate layer is about 5 to about 25 micrometres.

3. A membrane as claimed in Claim 1 or Claim 2, wherein the average pore size of the fine pores in said comparatively dense porous intermediate layer is about 10 to about 100 times larger than the average pore size of the fine pores in said dense surface layer.

4. A membrane as claimed in any preceding Claim, wherein the average pore size of the fine pores in said porous substrate layer is about 3 to about 50 times larger than the average pore size of the fine pores in said comparatively dense porous intermediate layer.

5. A membrane as claimed in any preceding Claim, wheein said aromatic polysulfone has repeating units of the formula

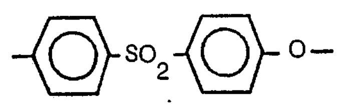

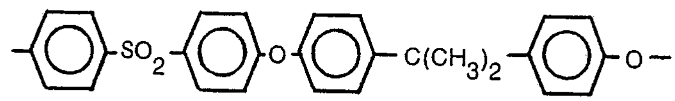

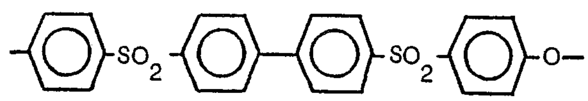

**Patentansprüche**

1. Für die Ultrafiltration geeignete, halbdurchlässige Membran, gekennzeichnet durch:
(a) eine dichte Oberflächenschicht mit einer Dicke von etwa 0,01 bis etwa 1 μm mit feinen Poron einer durchschnittlichen Porengrösse von etwa 0,5 bis 10 nm,
(b) eine vergleichsweise dichte poröse Zwischenschicht mit einer Dicke von etwa 2 bis etwa 30 μm mit feinen Poren und einer durchschnittlichen Porengrösse von etwa 10 bis etwa 200 nm, und
(c) eine poröse Substratschicht mit einer Dicke von etwa 20 bis etwa 500 μm mit feinen Poren einer durchschnittlichen Porengrösse von etwa 0,1 bis etwa 5 μm, wobei jede der Schichten aus einem aromatischen Polysulfon, welches keine Gruppe enthält, die dissoziiert, aufgebaut ist und die Schichten kontinuierlich in der Membran in der Reihenfolge (a), (b) und (c) ausgebildet sind, wobei die Membran ein Zurückweisung (bestimmt unter Verwendung von Polyethylenglykol mit einem Durchschnittsmolekulargewicht von 2.000) von wenigstens etwa 25% und einen Wasserfluss von reinem Wasser von wenigstens etwa 0,05 $m^3/m^2$.Tag.$kg/cm^2$ aufweist.

2. Membran gemäss Anspruch 1, worin die Dicke der vergleichsweise dichten porösen Zwischenschicht etwa 5 bis etwa 25 μm beträgt.

3. Membran gemäss Anspruch 1 oder Anspruch 2, worin die durchschnittliche Porengrösse der feinen Poren in der vergleichsweise dichten porösen Zwischenschicht etwa 10 bis etwa 100 Mal grösser ist als die durchschnittliche Porengrösse der feinen Poren in der dichten Oberflächenschicht.

4. Membran gemäss einem der vorhergehenden Ansprüche, worin die durchschnittliche Porengrösse

der feinen Poren in der porösen Substratschicht etwa 3 bis etwa 50 Mal grösser ist als die durchschnittliche Porengrösse der feinen Poren in der vergleichsweise dichten porösen Zwischenschicht.

5. Membran gemäss einem der vorhergehenden Ansprüche, worin das aromatische Polysulfon wiederkehrende Einheiten der Formeln

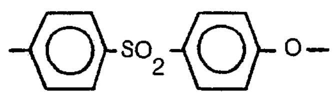

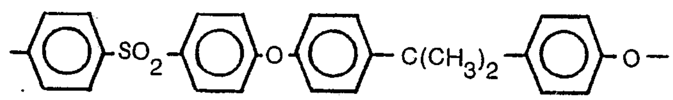

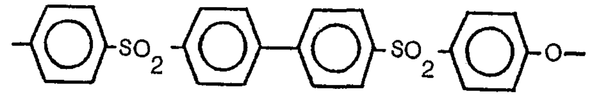

**Revendications**

1. Une membrane semiperméable appropriée pour l'ultrafiltration qui comprend:

(a) une couche superficielle dense d'une épaisseur d'environ 0,01 à environ 1 µm ayant des pores fins d'une dimension moyenne de pores d'environ 0,5 à 10 nm

(b) une crouche intermédiaire poreuse relativement dense d'une épaisseur d'environ 2 à 30 µm ayant des pores fins d'une dimension moyenne de pores d'environ 10 nm à environ 200 nm et

(c) une couche de substrat poreuse d'une épaisseur d'environ 20 à environ 500 µm ayant des pores fins d'une dimension moyenne de pores d'environ 0,1 à environ 5 µm,

chacune desdites couches étant composée d'une polysulfone aromatique exempte de groupes dissociables et les couches étant formées en continu dans la membrane dans l'ordre (a), (b), puis (c), ladite membane ayant un rejet (déterminé en utilisant la polyéthylèneglycol d'un poids moléculaire moyen de 2000) d'au moins environ 25% et un flux d'eau pure d'au moins environ 0,05 $m^3/m^2.j.kg/cm^2$.

2. Une membrane selon la revendication 1, dans laquelle l'épaisseur de ladite couche intermédiaire poreuse relativement dense est d'environ 5 à environ 25 µm.

3. Une couche selon la revendication 1 ou 2, dans laquelle la dimension moyenne de pores des pores fins dans ladite couche intermédiaire poreuse relativement dense est d'environ 10 à environ 100 fois plus grande que la dimension moyenne de pores des pores fins dans ladite couche superficielle dense.

4. Une membrane selon l'une quelconque des revendications précédentes, dans laquelle la dimension moyenne de pores des pores fins dans ladite couche de substrat poreuse est d'environ 3 à environ 50 fois plus grande que la dimension moyenne de pores des pores fins dans ladite couche intermédiaire poreuse relativement dense.

5. Une membrane selon l'une quelconque des revendications précédentes, dans laquelle ladite polysulfone aromatique comprend des motifs récurrents de formule:

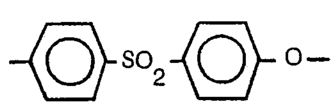

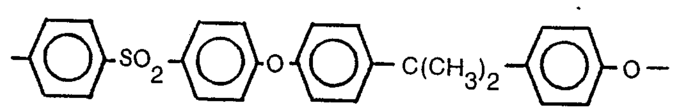

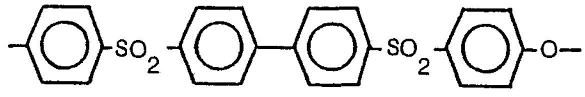

FIG.1.

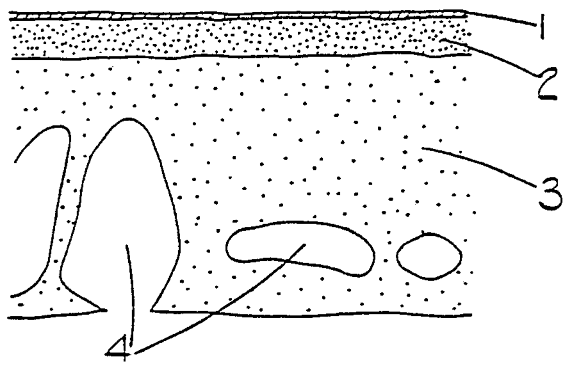


FIG.2.

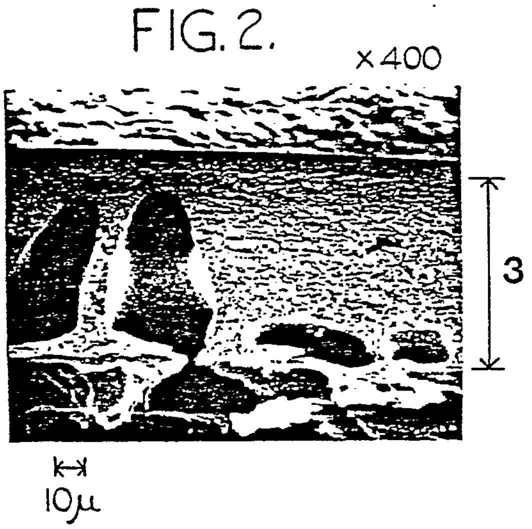


FIG.3.

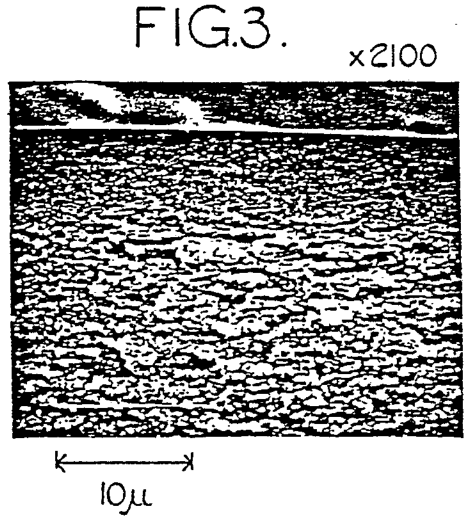


FIG.4.

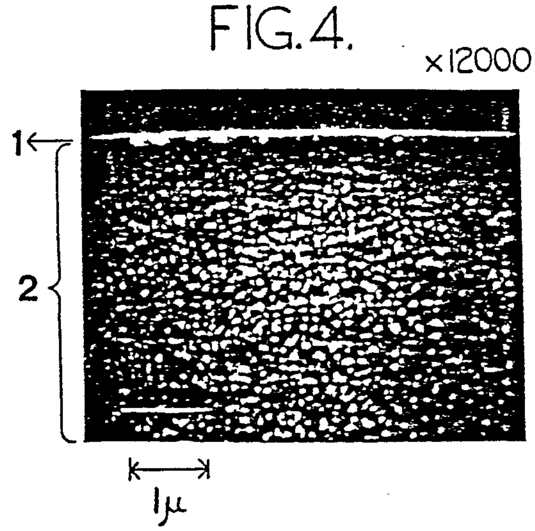


FIG.5.